# EUROPÄISCHE PATENTSCHRIFT

(11) **EP 0 785 026 B1**
(45) Veröffentlichungstag und Bekanntmachung des Hinweises auf die Patenterteilung: **25.07.2001**
(21) Anmeldenummer: 97870002.9
(22) Anmeldetag: 15.01.1997
(51) Int. Cl.: B02C 18/14, B02C 18/18

(54) **Ein Schneidwerk zur Abfallzerkleinerung über die gesamte Zuführbreite mittels versetzt angeordneter starrer Messer und eines Ambosses**
Shredding device for the reduction of waste material across the overall width of the feeding section, using rigid staggered cutting elements and an anvil
Dispositif de coupe pour le broyage de déchets sur la totalité de la largeur d'alimentation au moyen de couteaux fixes décalés et une enclume

(30) Priorität: 24.01.1996 BE 9600063
(43) Veröffentlichungstag der Anmeldung: 23.07.1997
(73) Patentinhaber: Lietaer, Emiel, 8553 Otegem (BE)
(72) Erfinder: Lietaer, Emiel, 8553 Otegem (BE)

(56) Entgegenhaltungen:
- WO-A-84/03235
- DE-A- 4 021 058
- DE-U- 9 003 348
- LU-A- 34 053
- US-A- 3 039 505
- US-A- 3 658 265
- US-A- 3 724 767

## Beschreibung

Die Erfindung bezieht sich auf ein Schneidwerk zur Abfallzerkleinerung über die gesamte Zuführbreite mittels einer mit starren Messern ausgestatteten Abtriebswelle, wie beschrieben im Anspruch 1.

Die Messerwelle wird vor allem, aber nicht ausschließlich, bei Gartenschreddern zum Zerkleinern von Gartenabfällen wie Ästen, Laub und Stutzabfällen eingesetzt.

Auf dem Markt sind verschiedene Systeme zum Zerkleinern von Gartenabfällen erhältlich.

So gibt es zum Beispiel Systeme, bei denen die Schnittfläche der Messer quer zur Zuführrichtung angeordnet sind. Denken wir zum Beispiel an Messer, die auf eine Scheibe montiert sind. Das Material wird scheibenmäßig von einem auf einer Scheibe montierten drehenden Messer abgeschnitten. Das Messer schneidet quer zur Faserrichtung, so daß eine große Leistung erfordert wird und das Messer immer scharf sein muß. Die Struktur des zerkleinerten Materials ermöglicht zwar die Kompostierung, aber derartige Systeme eignen sich jedoch nur zum Zerkleinern von Ästen.

Ein anderer Typ Gartenschredder wird als Schläger- oder Schlegeltrommel bezeichnet. Um die Welle herum sind Schlaghämmer oder Schneidemesser montiert. Sie werden parallel nebeneinander angeordnet und drehen sich entsprechend der Zuführrichtung. Durch die Drehbewegung wird das Material von den Schlaghämmern zerschlagen oder von den Messern zerschnitten. Ein erster Nachteil derartigen Maschinen ist, daß die Gartenabfälle zwischen den Schlaghämmern oder Messern hindurch passieren können, damit sie nicht gegeneinander montiert sind. Ein weiterer Nachteil ist, daß diese Systeme nach dem Prinzip der Zentrigulkräfte arbeiten.

Dieses System führt jedoch zu Einbüßen in der Produktionsleistung.

Beim Einführen des zu zerkleinernden Materials wird infolge der zunehmenden Belastung die Drehzahl reduziert, was zu einer erheblichen Verringerung der Leistung führt. Meistens versucht man mittels eines überdimensionierten Antriebs die Einbüße in der Produktionsleistung auszugleichen oder wenigstens hinauszuschieben.

Die Nachteile können wir folgendermaßen zusammenfassen :
- im Vergleich zur zu verarbeitenden Menge ist der Antrieb überdimensioniert,
- und/oder das zerkleinerte Material ermöglicht keine optimale Kompostierung,
- und/oder es kann nur eine Art von Gartenabfällen, d.h. Äste, zerkleinert werden,
- und/oder das Material wird unzureichend zerkleinert.

Vorliegende Erfindung bietet die perfekte Lösung, in dem Sinne, daß an die Ursache obengenannter Mängel herangegangen wird.

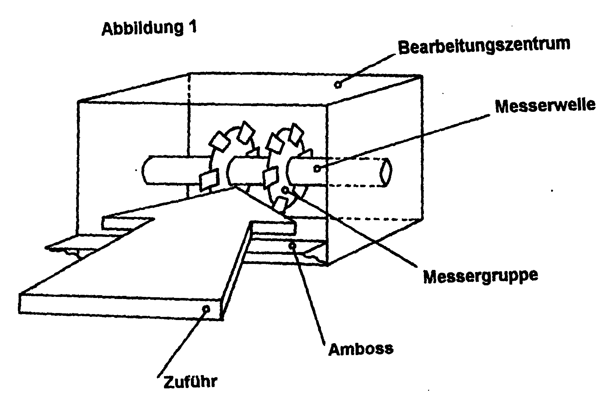

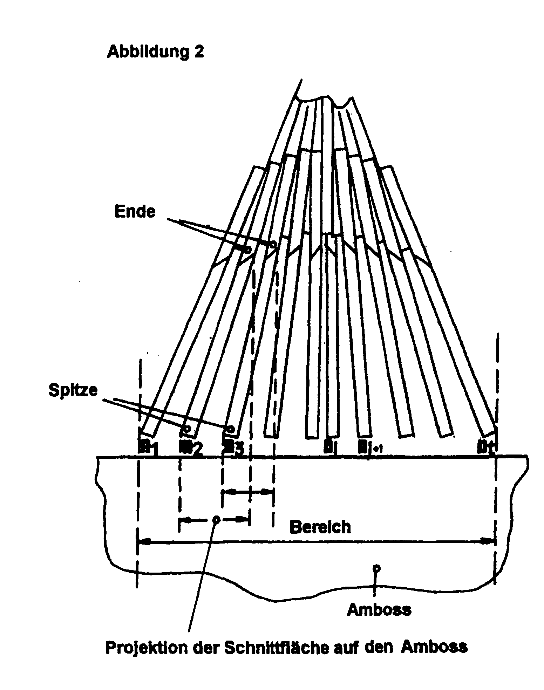

Gehen wir näher auf die Erfindung ein. Für die Terminologie verweisen wir Ihnen auf die Abbildungen 1 und 2.

Abbildung 1 ist eine dreidimensionale Darstellung des Bearbeitungszentrums mit Angabe der terminologie.

Abbildung 2 zeigt die stellung der Messer im Augenblick, in dem sie am Amboß entlang passieren.

Die Gartenabfälle werden zwischen den Schneidemessern und einem Amboß zerkleinert. Der Zerkleinerungsvorgang ist eine Kombination von Spalten und Schneiden.

Die Abtriebswelle ist parallel zur Zuführbreite angeordnet. Die Schneidemesser werden derart auf die Welle montiert, daß die Schnittflächen der Messer in Zuführrichtung liegen. Eine Anzahl Messer werden an einer bestimmten Stelle um die Welle herum montiert und bilden also eine »Messergruppe«. Innerhalb einer Messergruppe sind die Messer versetzt angebracht, so daß die Projektionen der Schnittflächen auf den Amboß einander überlappen oder aneinander anschließen. Auf diese Weise werden verschiedene Messergruppen auf die Welle montiert und können die Abfälle über die gesamte Zuführbreite zerkleinert werden.

Der Wirkungsgrad vorliegendes Schneidwerks wird vor allem von drei Faktoren bestimmt.
- Die versetzt angeordneten Messer bewirken eine Zerkleinerung des Materials über die gesamte Zuführbreite.
- Die starren Messer, deren Schnittfläche in Zuführrichtung angeordnet sind, gewährleisten eine absolute Zwangsdurchführung des Materials zwischen Messer und Amboß, so daß das Material unwiderruflich zerkleinert wird.
- Der Amboß wirkt wie eine Axt, so daß das Material nicht nur geschnitten, sondern auch gespaltet wird.

Wie bereits erwähnt, sind die Messer dermaßen versetzt auf die Welle montiert, daß die gesamte Breite erreicht wird. Jedes Messer beschäftigt sich mit einem bestimmten Bereich der Zuführbreite. Dies heißt also, daß alle zugeführten Abfälle zwangsweise auf der Höhe des Ambosses von den Messern zerschnitten werden. Ein optimal gleichmäßig und völlig zerkleinertes Material ist das Resultat.

Da die Messer starr auf die Welle montiert sind, werden die Abfälle auch tatsächlich zerschnitten, denn die starren Messer können nicht zurückschlagen und das Material also ungeschnitten vorbeifahren lassen. Durch die Anordnung der Messer in Zuführrichtung wird das Holz in Faserrichtung gespaltet und schließlich zerkleinert. Der Amboß wird beim Spalten als Prellbock eingesetzt. Die starren Messer arbeiten wie Keile, die allem, wem Sie auf ihrem Weg begegnen, spalten. Auf diese Weise wird die Leistung der Maschine optimal benutzt und der maximale Nutzeffekt gewährleistet. Außerdem ist die benötigte Leistung gering, da die Messer in Faserrichtung schneiden.

Das zerfaserte Material mit einem sehr hohen Anteil von Feinteilen und die Struktur dieses zerfaserten Materials gewährleisten eine sehr schnelle Kompostierung.

Das Schneidwerk ist für allerart Abfälle ausgelegt, schneidet kontinuierlich und zwangsweise das zugeführte Material und stellt nur wenig Ansprüche in bezug auf die Art des zu zerkleinernden Materials (feucht, trocken, fein, grob, hart, sanft, ...). Dieses Schneidwerk kann nicht allein für die Beseitigung von Gartenabfällen, sondern auch für die Entsorgung anderer Abfälle eingesetzt werden.

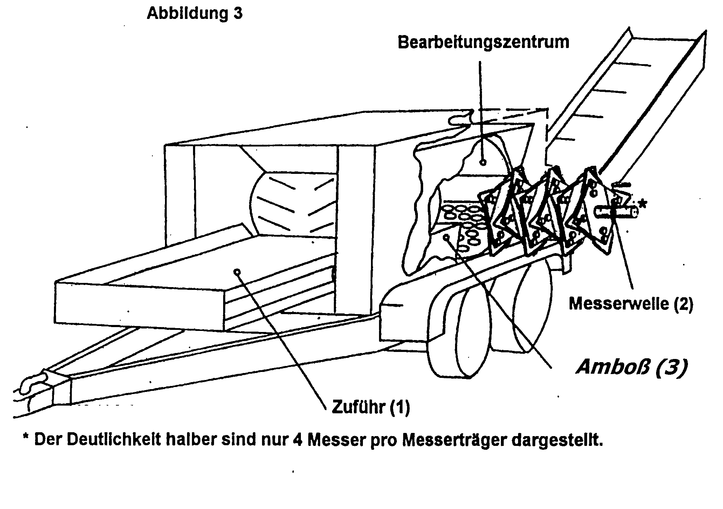

Nachstehend beschreiben wir eine konkrete Anwendung. Die Nummern verweisen auf die Abbildungen 3, 4, 5 und 6. Die nachstehende ausführliche Beschreibung versteht sich als ein Beispiel und nicht als die einzige Anwendungsmöglichkeit des Schneidwerks.

Abbildung 3 zeigt einen möglichen Aufbau einer Maschine mit einer Messerwelle.

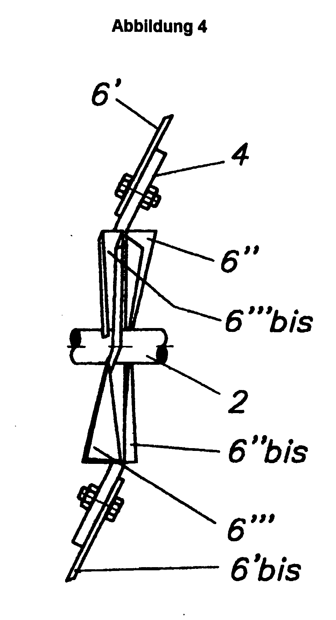

Abbildung 4 zeigt die Vorderansicht (in Zuführrichtung) einer Messergruppe mit sechs Schneidemessern.

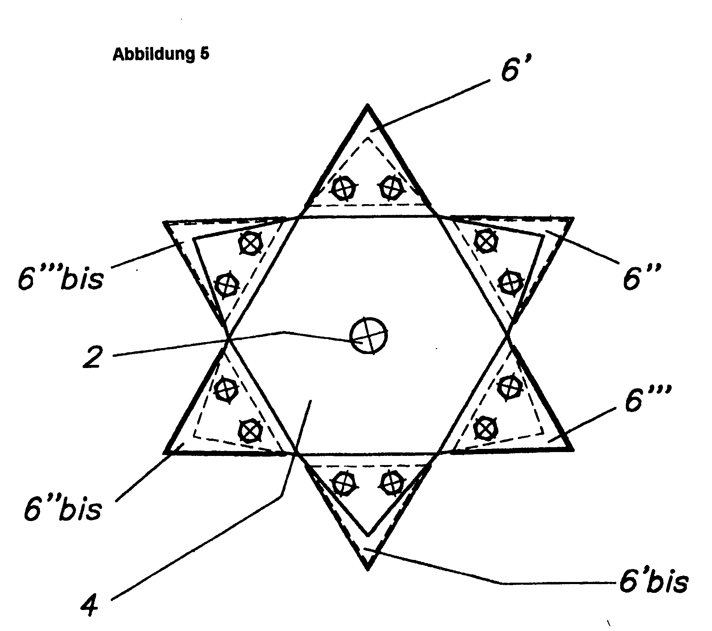

Abbildung 5 zeigt die Seitenansicht einer Messergruppe mit sechs Schneidemessern.

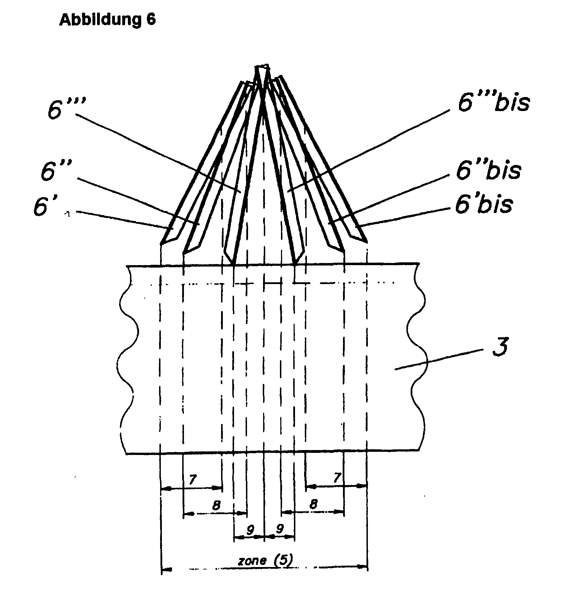

Abbildung 6 zeigt die Stellung der Messer, im Augenblick, in dem sie am Amboß vorbeifahren. Die Abstände (7), (8) und (9) sind die Projektionen der Schnittfläche auf den Amboß.

Das zu zerkleinernde Material wird in dieser Anwendung über den Einfülltrichter (1) zur Messerwelle (2) geführt. Die Messerwelle befindet sich hinten in der Maschine. Unterhalb des Einfülltrichters befindet sich der Amboß (3). Auf die Messerwelle werden sechs Messerträger(4) montiert. Die sechsunddreißig Messer werden in sechs Gruppen von jeweils sechs Messern aufgeteilt und jede Gruppe wird auf einen Messerträger montiert. Die Messerwelle ist parallel zur Zuführbreite montiert, so daß die Schnittfläche der Messer in Zuführrichtung angeordnet sind.

Innerhalb einer Messergruppe werden die Messer durch Falten des Messerträgers versetzt angeordnet. Die beiden äußeren Messer 6' und 6'bis grenzen mit der Spitze ihrer Schnittfläche den Arbeitsbereich der Messergruppe ab. Die Messer 6" und 6"bis sind ebenfalls versetzt angebracht, so daß beim Drehen die Spitze ihrer Schnittfläche in die Schneidezone der vorigen zwei Messer fällt. Gleiches gilt ebenfalls für die letzten zwei Messer 6"' und 6"'bis.

In dieser Anordnung gilt also, daß die Messer 6' und 6'bis den Bereich 7 (siehe Abb. 6) bearbeiten, die Messer 6" und 6"bis den Bereich 8 bearbeiten, und die Messer 6"' und 6"'bis den Bereich 9 bearbeiten. Aus der gestrichelten Linie ergibt sich, daß die Schneidezone der Messer 6" und 6"bis innerhalb der Schneidezone der Messer 6' und 6'bis anfängt. Es ist darauf zu achten, daß die Bereiche 7 und 8 einander überlappen oder aneinander anschließen. Gleiches gilt für die Bereiche 8 und 9, mit der Bedingung, daß das Ende der Schnittfläche der beiden inneren Messern 6"' und 6"'bis einander überlappen müssen.

Indem 6 Messergruppen nebeneinander montiert werden, wird die gesamte Zuführbreite erreicht.

## Patentansprüche

1. Schneidwerk zur Abfallzerkleinerung aufweisend einen Amboß (3) und auf eine Welle (2) montierte Messergruppen mit starren Messern wobei innerhalb einer Gruppe die Messer (6) versetzt um die Welle montiert sind, so daß die Projektionen ihrer Schnittflächen auf den Amboß einander überlappen oder aneinander anschließen und wobei die verschiedenen Messergruppen so auf die Welle (2) montiert sind, daß die gesamte Zuführbreite des Schneidwerks überdeckt wird.

## Claims

1. Cutting mechanism designed for shredding of vegetable residues. Consists of an anvil (3) and a shaft (2), the latter accommodating various sets of rigid blades. The shaft has its knives (6) fitted so that the intersection planes projected in the anvil plane either overlap one another or lie close to one another. In addition, the shaft (2) has its knives fitted over the entire inlet width of the cutting mechanism.

## Revendications

1. Mécanisme de coupe pour broyer des déchets. Essentiellement composé d'une enclume (3) et d'un arbre (2) recevant des jeux de couteaux composés de lames rigides. Les lames (6) d'un jeu sont solidaires de l'arbre de façon à assurer chevauchement ou contact des projections de leur plan de coupe dans le plan de l'enclume. Les jeux de couteaux sont fixés sur l'arbre (2) sur la largeur totale d'entrée du mécanisme de coupe.
